# EUROPÄISCHE PATENTSCHRIFT

(11) **EP 3 318 425 B1**
(45) Veröffentlichungstag und Bekanntmachung des Hinweises auf die Patenterteilung: **09.10.2019**
(21) Anmeldenummer: 17186990.2
(22) Anmeldetag: 21.08.2017
(51) Int. Cl.: B60C 19/00, B60C 23/04

(54) **FAHRZEUGLUFTREIFEN UND VERFAHREN ZUR ERKENNUNG DER GEFAHR VON AQUAPLANING**
PNEUMATIC TYRE FOR A VEHICLE AND METHOD FOR DETECTING THE RISK OF AQUAPLANING
PNEUMATIQUE DE VÉHICULE ET PROCÉDÉ DE DÉTECTION DU DANGER D'AQUAPLANAGE

(30) Priorität: 07.11.2016 DE 102016221725
(43) Veröffentlichungstag der Anmeldung: 09.05.2018
(73) Patentinhaber: Continental Reifen Deutschland GmbH, 30165 Hannover (DE)
(72) Erfinder: Bederna, Christoph, 30890 Barsinghausen (DE); Busche, Joachim, 31157 Sarstedt (DE)
(74) Vertreter: Finger, Karsten

(56) Entgegenhaltungen:
- WO-A1-2010/024819
- WO-A1-2013/101064
- US-A1- 2015 211 959

## Beschreibung

Die Erfindung betrifft einen Fahrzeugluftreifen mit einem profilierten, zumindest eine Umfangsrille aufweisenden Laufstreifen, einem Gürtelverband, einer Radialkarkasse und einer die Innenseite des Reifens bildende Innenschicht, wobei an der Innenseite des Reifens zumindest ein Sensorelement angebracht ist, welches in lateraler Richtung stattfindende Biegungen des Reifens detektiert und mit der jeweiligen Biegung korrelierende Signale an eine im Reifen eingebaute Auswerteelektronik übermittelt, wobei die Auswerteelektronik in Abhängigkeit von vorgegebenen Auswertekriterien Signale an ein Anzeigesystem im Fahrzeug oder ein Sicherheitssystem des Fahrzeuges sendet. Die Erfindung betrifft ferner ein Verfahren zur Erkennung der Gefahr von Aquaplaning bei einem Fahrzeugluftreifen, welcher einen profilierten Laufstreifen mit zumindest einer Umfangsrille, einen Gürtelverband, eine Radialkarkasse und eine die Innenseite des Reifens bildende Innenschicht aufweist.

Ein Fahrzeugluftreifen der eingangs genannten Art ist aus der WO 2010/024819 A1 bekannt.

Das Auftreten von Aquaplaning - das Aufschwimmen eines Fahrzeugluftreifens durch das Entstehen eines Wasserkeils auf nassem Untergrund - stellt nach wie vor eine nicht zu unterschätzende Gefahr für den Fahrbetrieb eines Kraftfahrzeuges dar. Besonders unangenehm ist, dass Aquaplaning oft ohne eine vom Fahrer erkennbare Vorwarnung auftritt. Es sind bereits Verfahren zur Aquaplaning-Erkennung von Fahrzeugluftreifen und entsprechende Vorrichtungen vorgeschlagen worden. So ist beispielsweise aus der DE 42 42 726 A1 ein Verfahren bekannt, bei welchem die Verformung von Profilelementen des Laufstreifens in Umfangsrichtung beim Durchlauf durch den Reifenlatsch erfasst wird, wobei der derart ermittelte Signalverlauf ausgewertet wird und in Abhängigkeit von vorgegebenen Auswertungskriterien ein die Aquaplaning-Gefahr anzeigendes Signal ausgelöst wird. Dabei ist in mindestens einem Profilelement des Laufstreifens ein Sender eingebettet und an der Reifeninnenseite oder an der Fahrzeugfelge sind Empfänger angeordnet, welche Abstandsänderungen zum Sensor erfassen, sodass ein die Verformung des Profilelementes in Umfangsrichtung beschreibendes Signal an die Auswerteelektronik gesendet wird. Der Sender ist insbesondere ein Permanentmagnet, die Empfänger sind Hallgeneratoren. Dieses bekannte System umfasst neben der erforderlichen Auswerteelektronik die Einbettung eines Magneten in den Laufstreifen sowie separate Empfänger und ist daher komplex aufgebaut. Darüber hinaus korreliert die Verformung von Profilelementen in Umfangsrichtung nur bedingt mit einer Gefahr von Aquaplaning.

Der Erfindung liegt die Aufgabe zugrunde, eine verlässliche, möglichst frühzeitige Erkennung eines hinsichtlich Aquaplaning kritischen Fahrzustandes zu ermöglichen, um ein Aufschwimmen von Reifen wirkungsvoll zu verhindern.

Die gestellte Aufgabe wird mit einem Fahrzeugluftreifen gelöst, bei welchem das Sensorelement ausschließlich radial innerhalb der Umfangsrille angebracht ist und ausschließlich Biegungen in diesem Bereich detektiert.

Beim erfindungsgemäße Verfahren wird an der Innenseite ausschließlich radial innerhalb der Umfangsrille ein Biegungen des Reifens ausschließlich in diesem Bereich detektierendes Sensorelement angebracht, welches die beim Abrollen des Reifens im Latschdurchgang in lateraler Richtung stattfindenden Biegungen des Reifens detektiert, wobei vom Sensorelement mit der jeweiligen Biegung korrelierende Signale an eine im Reifen eingebaute Auswerteelektronik gesendet werden, welche in Abhängigkeit von vorgegebenen Auswertekriterien Signale an ein Anzeigesystem im Fahrzeug oder ein Sicherheitssystem des Fahrzeuges sendet

Knapp bevor Aquaplaning auftritt oder bei beginnendem Aquaplaning wird das unter dem Reifen befindliche Wasser nicht mehr vollständig und nicht mehr drucklos von den Umfangsrillen aufgenommen, es baut sich sowohl vor als auch in der Bodenaufstandsfläche des Reifens Wasserdruck auf. Beim Abrollen der Reifen eines Fahrzeuges auf trockener Straße kommen in der Bodenaufstandsfläche die Profilpositive mit der Straße in Kontakt. Dabei verbiegt sich jeder Reifen lokal unterhalb der Umfangsrillen konvex, da der Gürtelverband nicht biegesteif ist und die Rillen keinen Kontaktdruck zum Untergrund ausüben. Auf nassem Untergrund verbiegt sich hingegen durch den Wasserdruck in den Umfangsrillen knapp vor oder bei beginnendem Aquaplaning der Reifen lokal und radial innerhalb der Umfangsrillen konkav bzw. es wird die vorherige konvexe Verbiegung geringer. Der gemäß der Erfindung vorgesehene Biegesensor detektiert die geänderte Biegung, das von der Auswerteelektronik diesbezüglich erkannte Signal führt dazu, dass einem Sicherheitssystem oder einer Sicherheitsanzeige im Fahrzeug ein Signal übermittelt wird.

Erfindungsgemäß kann das Sensorelement auf besonders einfache Weise an der Innenseite des Fahrzeugluftreifens angeklebt oder anvulkanisiert sein.

Bei einer bevorzugten Ausführungsvariante der Erfindung weist das Sensorelement einen Aufbau mit einer zug- und druckfesten, unmittelbar an der Innenseite angebrachten Schicht, einer Gummischicht und einem an der Außenseite der Gummischicht befindlichen Biegesensor auf. Bei dieser besonders zweckmäßigen Ausführung des Sensorelementes ist somit sichergestellt, dass beim Auftreten von lateralen Dehnungen im Gürtelverband keine Beeinflussung des Sensorelementes erfolgt. Die zweite, mittlere Schicht, eine Gummischicht, erfüllt die Funktion eines Abstandhalters und ist derart ausgeführt, dass sie elektrisch isolierend wirkt.

Besonders zweckmäßig ist eine Ausführung der zug- und druckfesten Schicht aus in Gummi eingebetteten, in lateraler Richtung parallel zueinander verlaufenden Stahlkorden. Eine derartige Schicht lässt sich beispielsweise mit herkömmlichen Primern bzw. Haftvermittlern auf besonders haltbare Weise mit der aus Gummi bestehenden Innenseite des Reifens verbinden.

Besonders bevorzugt ist ferner eine Ausführung des Sensorelementes, bei welcher die den Biegesensor bildende Schicht eine elektrisch leitfähige Gummischicht ist. Es können jedoch andere, insbesondere auch kommerziell erhältliche Biegesensoren verwendet werden. Bei der bevorzugten Ausführung des Sensorelementes mit einem dreischichtigen, in jeder Schicht Gummimaterial enthaltenden Aufbau kann das Sensorelement aus unvulkanisierten Schichten erstellt werden, die durch eine nachfolgende Vulkanisation miteinander fest verbunden werden.

Das Anzeigesystem im Fahrzeug, welches bei Aquaplaning-Gefahr von der Auswerteelektronik entsprechend angesteuert wird, kann derart ausgeführt sein, dass es ein optisches und/oder ein akustisches Signal für den Fahrer abgibt. Alternativ und zusätzlich kann bei Aquaplaning-Gefahr vorgesehen sein, dass ein Sicherheitssystem die Geschwindigkeit des Fahrzeuges ohne Zutun des Fahrers reduziert.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Querschnitt durch einen Fahrzeugluftreifen während des Abrollens am Untergrund, wenn kein Aquaplaning auftritt,
Fig. 2 einen Querschnitt durch den Fahrzeugluftreifen während des Abrollens am Untergrund, jedoch knapp vor oder während des Auftretens von Aquaplaning und
Fig. 3 eine Schnittdarstellung eines Sensorelementes.

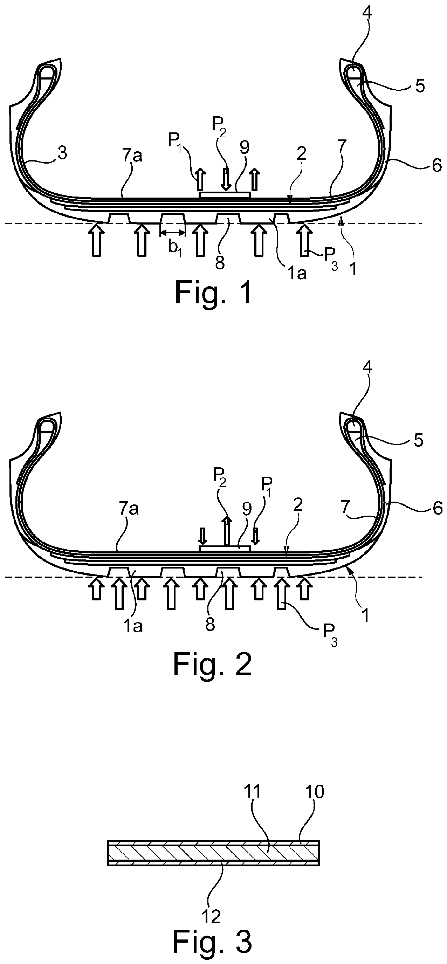

Ein gemäß der Erfindung ausgeführter Fahrzeugluftreifen kann ein beliebiger Fahrzeugluftreifen sein, daher ein Reifen für Personenkraftwagen, Vans, Lighttrucks, Zweiradfahrzeuge oder für Nutzfahrzeuge. Der in Fig. 1 und 2 gezeigte Fahrzeugluftreifen ist beispielhaft ein PKW-Reifen und weist einen profilierten Laufstreifen 1, einen radial innerhalb des Laufstreifens 1 angeordneten Gürtelverband 2, eine ein- oder mehrlagige Radialkarkasse 3, Wulstbereiche mit Wulstkernen 4, Kernprofilen 5 und gegebenenfalls weiteren Verstärkungslagen sowie Seitenwänden 6 und eine Innenschicht 7 auf. Der Gürtelverband 2 ist in an sich bekannter Weise aus mehreren Gürtellagen und gegebenenfalls auch einer Gürtelbandage aufgebaut.

Der profilierte Laufstreifen 1 weist Profilpositive, beispielsweise Profilrippen oder Profilblöcke, und Umfangsrillen 8 auf, deren Breite b₁ an der Laufstreifenaußenfläche mindestens 3,0 mm beträgt.

Als Umfangsrillen 8 gelten Rillen, die in Umfangsrichtung oder im Wesentlichen in Umfangsrichtung des Laufstreifens 1 verlaufen oder Abschnitte aufweisen, die unter einem Winkel von höchstens 45° zur Umfangsrichtung verlaufen. Als Umfangsrillen 8 gelten ferner Schrägrillen oder Diagonalrillen, die, über einen Bereich der Breite des Laufstreifens 1 verlaufend, ebenfalls einen Winkel von höchstens 45° mit der Umfangsrichtung einschließen. Darüber hinaus kann der Laufstreifen 1 in üblicher Weise mit Querrillen, sonstigen schmäleren Rillen, Einschnitten und dergleichen versehen sein.

Zumindest an einer Stelle der Innenseite 7a des Reifens, radial innerhalb der Position einer Umfangsrille 8 ist gemäß der Erfindung ein Sensorelement 9 angebracht, beispielsweise angeklebt oder anvulkanisiert. Das Sensorelement 9 erfasst Biegungen in lateraler Richtung, also Biegungen unter einem Winkel von 90° zur Umfangsrichtung, und besteht bei einer bevorzugten Ausführungsform der Erfindung und wie Fig. 3 zeigt aus drei Schichten. Die erste Schicht, mittels welcher das Sensorelement 9 auf der Innenseite 7a des Reifens aufgebracht ist, ist eine in Messrichtung, daher in lateraler Richtung, zug- und druckfeste Schicht 10, beispielsweise eine dünne Gummischicht, in welche parallel zueinander und in lateraler Richtung verlaufende Stahlkorde eingebettet sind. Die zug- und druckfeste Schicht 10 vermeidet eine Beeinflussung des Sensorelementes 9 beim Auftreten von lateralen Dehnungen im Gürtelverband 2. Die zweite, weiter radial innen befindliche Schicht 11 ist eine Gummischicht, welche eine Biegung der zug- und druckfesten Schicht 10 als Dehnung in die dritte Schicht, einen Biegesensor 12, überträgt. Die Gummischicht 11 erfüllt auch die Funktion eines Abstandshalters und eines elektrischen Isolators. Die Biegesensor-Schicht 12 besteht aus einem Material, welches seinen elektrischen Widerstand bei Dehnung ändert, beispielsweise aus einer elektrisch leitfähigen, einen entsprechend hohen Anteil an Ruß enthaltenden,
Gummimischung. Die Schicht 12 ist an ihren beiden seitlichen Randbereichen mit einer Auswerteelektronik in Verbindung, die an geeigneter Stelle innerhalb des Reifens eingebaut ist. In der Auswerteelektronik werden die von der Biegesensor-Schicht 12 kommenden Signale gemäß vorgegebenen Auswertekriterien entsprechend ausgewertet, sodass bei der Gefahr des Auftretens von Aquaplaning, wie noch beschrieben wird, per Funk ein Signal ins Fahrzeuginnere oder an ein Sicherheitssystem des Fahrzeuges übermittelt wird. Im Fahrzeuginneren kann dem Fahrzeuglenker eine optische oder akustische Anzeige eine Aquaplaning-Gefahr anzeigen oder es kann vorgesehen sein, dass ein automatischer Eingriff eines Sicherheitssystems in das Fahrverhalten des Fahrzeuges, beispielsweise ein Herabsetzen der Geschwindigkeit, erfolgt.

Rollt der Fahrzeugluftreifen auf trockenem Untergrund ab, treten in der Bodenaufstandsfläche, dem Latsch, die Profilpositive 1a, beispielsweise Profilrippen, mit dem Untergrund in Kontakt. Dabei verbiegen sich die Bereiche des Fahrzeugluftreifen jeweils lokal radial innerhalb der Umfangsrillen 8 leicht konvex (nach außen), da der Gürtel nicht biegesteif ist und die Umfangsrillen 8 ja keinen Kontaktdruck auf den Untergrund ausüben. Fig. 1 veranschaulicht diese leichte konvexe Biegung durch die Pfeile P₁ und P₂ am Sensorelement 9. Die Druckverhältnisse im Latsch zeigen die Pfeile P₃.

Auf nassem Untergrund und knapp bevor Aquaplaning beginnt oder bereits bei beginnendem Aquaplaning wird das unterhalb des Laufstreifens 1 des Fahrzeugluftreifens befindliche Wasser nicht mehr vollständig und auch nicht mehr drucklos von den Umfangsrillen 8 aufgenommen und abgeführt. Es baut sich in der Einlaufzone des Fahrzeugluftreifens in und vor den Umfangsrillen 8 ein Wasserdruck auf, welcher etwa bis auf Reifenfülldruck ansteigt. Erst wenn ein Druck dieser Größe erreicht ist fängt der Fahrzeugluftreifen an, aufzuschwimmen. Bis zu diesem Punkt bleibt die Länge des Footprints in der Bodenaufstandsfläche konstant. Durch den in der Bodenaufstandsfläche und vor der Bodenaufstandsfläche aufgebauten Wasserdruck verbiegen sich knapp vor oder bei beginnendem Aquaplaning in der Bodenaufstandsfläche die Bereiche des Fahrzeugluftreifen lokal unterhalb der Umfangsrillen 8 derart, dass die Biegungen nun konkav sind oder die vorher vorhandenen konvexen Biegungen weniger konvex sind. Diese geänderte Verbiegung wird bei einer Umfangsrille 8 vom Sensorelement 9 detektiert. Die Auswerteelektronik erkennt an dem übermittelten Signal, dass ein sicherheitsrelevanter Zustand erreicht ist und sendet ein entsprechendes Signal an das Sicherheitssystem bzw. ins Fahrzeuginnere, wie bereits erwähnt. Fig. 2 verdeutlicht die geänderte Biegung des Sensorelementes 9 durch die unterschiedlichen Längen der Pfeile P₁ und P₂. Die in unterschiedlichen Längen eingezeichneten Pfeile P₃ versinnbildlichen die Druckverhältnisse im Latsch, die längeren Pfeile P₃ die größeren Drücke durch das Wasser in den Umfangsrillen 8.

Die Umfangsrillen 8 weisen eine Tiefe auf, die entweder der für den jeweiligen Fahrzeugluftreifentyp vorgesehenen Profiltiefe entspricht oder die geringer ist als die Profiltiefe. Dabei kann auch vorgesehen sein, die Umfangsrille 8 in jenem Bereich, wo radial innerhalb der Umfangsrille 8 an der Innenseite 1a ein Sensorelement 9 angebracht ist, lokal über einige Zentimeter ihrer Erstreckung mit geringerer Tiefe als im sonstigem Verlauf auszuführen, um schon bei geringerer Wasserhöhe einen entsprechenden Druck und damit ein Ansprechen des Sensors zu erreichen.

Bei einer weiteren Ausführungsvariante der Erfindung sind über den Umfang des Reifens an der Innenseite 7a mehrere Sensorelemente 9 radial innerhalb des Verlaufes einer Umfangsrille 8 angebracht und insbesondere elektrisch parallel geschaltet. Die Signale der Sensorelemente 9 werden in der Auswerteelektronik entsprechend ausgewertet. Bei mehreren Sensorelementen 9 kann ein hinsichtlich Aquaplaning kritischer Fahrzustand schneller und sicherer erfasst werden.

### Bezugsziffernliste

- 1: Laufstreifen
- 1a: Profilpositiv
- 2: Gürtelverband
- 3: Radialkarkasse
- 4: Wulstkern
- 5: Kernprofil
- 6: Seitenwand
- 7: Innenschicht
- 7a: Innenseite
- 8: Umfangsrille
- 9: Sensorelement
- 10, 11, 12: Schicht
- b₁: Breite
- P₁, P₂, P₃: Pfeil

## Patentansprüche

1. Fahrzeugluftreifen mit einem profilierten, zumindest eine Umfangsrille (8) aufweisenden Laufstreifen (1), einem Gürtelverband (2), einer Radialkarkasse (3) und einer die Innenseite (7a) des Reifens bildende Innenschicht (7), wobei an der Innenseite (7a) des Reifens zumindest ein Sensorelement (9) angebracht ist, welches in lateraler Richtung stattfindende Biegungen des Reifens detektiert und mit der jeweiligen Biegung korrelierende Signale an eine im Reifen eingebaute Auswerteelektronik übermittelt, wobei die Auswerteelektronik in Abhängigkeit von vorgegebenen Auswertekriterien Signale an ein Anzeigesystem im Fahrzeug oder ein Sicherheitssystem des Fahrzeuges sendet,
**dadurch gekennzeichnet,**
**dass** das Sensorelement (9) ausschließlich radial innerhalb des Verlaufes bzw. der Position der Umfangsrille (8) angebracht ist und ausschließlich Biegungen in diesem Bereich detektiert.

2. Fahrzeugluftreifen nach Anspruch 1, **dadurch gekennzeichnet, dass** das Sensorelement (9) an der Innenseite (1a) angeklebt oder anvulkanisiert ist.

3. Fahrzeugluftreifen nach Anspruch 1 oder 2, **dadurch gekennzeichnet, dass** das Sensorelement (9) einen Aufbau mit einer zug- und druckfesten, unmittelbar an der Innenseite (1a) angebrachten Schicht (10), einer Gummischicht (11) und einem an der Außenseite derselben befindlichen Biegesensor (12) aufweist.

4. Fahrzeugluftreifen nach Anspruch 3, **dadurch gekennzeichnet, dass** die zug- und druckfeste Schicht (10) aus in Gummi eingebetteten, in lateraler Richtung und parallel zueinander verlaufenden Stahlkorden besteht.

5. Fahrzeugluftreifen nach Anspruch 3, **dadurch gekennzeichnet, dass** die Gummischicht (11) elektrisch nicht leitend ausgeführt ist.

6. Fahrzeugluftreifen nach Anspruch 3, **dadurch gekennzeichnet, dass** der Biegesensor (12) eine elektrisch leitfähige Gummischicht ist.

7. Fahrzeugluftreifen nach einem der Ansprüche 1 bis 6, **dadurch gekennzeichnet, dass** die Umfangsrille (8) in jenem Bereich, wo radial innerhalb der Umfangsrille (8) an der Innenseite (1a) ein Sensorelement (9) angebracht ist, lokal über einige Zentimeter ihrer Erstreckung mit geringerer Tiefe als im sonstigem Verlauf ausgeführt ist.

8. Verfahren zur Erkennung der Gefahr von Aquaplaning bei einem Fahrzeugluftreifen, welcher einen profilierten Laufstreifen (1) mit zumindest einer Umfangsrille (8), einen Gürtelverband (2), eine Radialkarkasse (3) und eine die Innenseite (1a) des Reifens bildende Innenschicht (7) aufweist, wobei an der Innenseite (1a) ausschließlich radial innerhalb der Umfangsrille (8) ein Biegungen des Reifens ausschließlich in diesem Bereich detektierendes Sensorelement (9) angebracht wird, welches die beim Abrollen des Reifens im Latschdurchgang in lateraler Richtung stattfindenden Biegungen des Reifens detektiert, wobei vom Sensorelement mit der jeweiligen Biegung korrelierende Signale an eine im Reifen eingebaute Auswerteelektronik gesendet werden, welche in Abhängigkeit von vorgegebenen Auswertekriterien Signale an ein Anzeigesystem im Fahrzeug oder ein Sicherheitssystem des Fahrzeuges sendet.

9. Verfahren nach Anspruch 8, **dadurch gekennzeichnet, dass** bei Aquaplaning-Gefahr das Anzeigesystem im Fahrzeug ein optisches und/oder akustisches Signal abgibt.

10. Verfahren nach Anspruch 8, **dadurch gekennzeichnet, dass** das Sicherheitssystem die Geschwindigkeit des Fahrzeuges reduziert.

## Claims

1. Pneumatic vehicle tyre with a profiled tread (1), having at least one circumferential groove (8), a breaker belt assembly (2), a radial carcass (3) and an inner layer (7), forming the inner side (7a) of the tyre, wherein there is attached on the inner side (7a) of the tyre at least one sensor element (9), which detects bendings of the tyre taking place in the lateral direction and transmits signals correlating to the respective bending to evaluation electronics integrated in the tyre, wherein, depending on predetermined evaluation criteria, the evaluation electronics send signals to a display system in the vehicle or a safety system of the vehicle,
**characterized**
**in that** the sensor element (9) is exclusively attached radially within the profile or the position of the circumferential groove (8) and exclusively detects bendings in this region.

2. Pneumatic vehicle tyre according to Claim 1, **characterized in that** the sensor element (9) is adhesively attached or vulcanized on the inner side (1a).

3. Pneumatic vehicle tyre according to Claim 1 or 2, **characterized in that** the sensor element (9) has a structure with a tension- and compression-resistant layer (10), attached directly on the inner side (la), a rubber layer (11) and a bending sensor (12), located on the outer side of the same.

4. Pneumatic vehicle tyre according to Claim 3, **characterized in that** the tension- and compression-resistant layer (10) consists of steel cords embedded in rubber and running in the lateral direction and parallel to one another.

5. Pneumatic vehicle tyre according to Claim 3, **characterized in that** the rubber layer (11) is of an electrically non-conducting form.

6. Pneumatic vehicle tyre according to Claim 3, **characterized in that** the bending sensor (12) is an electrically conductive rubber layer.

7. Pneumatic vehicle tyre according to one of Claims 1 to 6, **characterized in that in that** region where a sensor element (9) is attached on the inner side (1a) radially within the circumferential groove (8), the circumferential groove (8) is formed with a smaller depth locally over several centimetres of its extent than elsewhere in its profile.

8. Method for detecting the risk of aquaplaning in the case of a pneumatic vehicle tyre which has a profiled tread (1), with at least one circumferential groove (8), a breaker belt assembly (2), a radial carcass (3) and an inner layer (7), forming the inner side (1a) of the tyre, wherein there is attached on the inner side (1a) of the tyre exclusively radially within the circumferential groove (8) a sensor element (9) detecting bendings of the tyre exclusively in this region, which detects the bendings of the tyre taking place in the lateral direction during the rolling of the tyre as it passes through the contact area, wherein signals correlating to the respective bending are sent by the sensor element to evaluation electronics integrated in the tyre, which, depending on predetermined evaluation criteria, send signals to a display system in the vehicle or a safety system of the vehicle.

9. Method according to Claim 8, **characterized in that**, when there is a risk of aquaplaning, the display system in the vehicle emits an optical and/or acoustic signal.

10. Method according to Claim 8, **characterized in that** the safety system reduces the speed of the vehicle.

## Revendications

1. Pneumatique de véhicule comprenant une bande de roulement profilée (1) pourvue d'au moins une rainure circonférentielle (8), un bandage d'armature (2), une carcasse radiale (3) et une couche intérieure (7) formant le côté intérieur (7a) du pneumatique, au moins un élément de détection (9), qui détecte des flexions du pneumatique se produisant dans la direction latérale et transmet des signaux corrélés à la flexion respective à une électronique d'évaluation intégrée dans le pneumatique, étant monté à l'intérieur (7a) du pneumatique, l'électronique d'évaluation envoyant des signaux à un système d'affichage situé dans le véhicule ou à un système de sécurité du véhicule en fonction de critères d'évaluation prédéterminés,
**caractérisé en ce que**
l'élément de détection (9) est exclusivement monté radialement à l'intérieur de la trajectoire ou à la position de la rainure circonférentielle (8) et ne détecte que des flexions dans cette zone.

2. Pneumatique de véhicule selon la revendication 1, **caractérisé en ce que** l'élément de détection (9) est collé ou vulcanisé du côté intérieur (1a).

3. Pneumatique de véhicule selon la revendication 1 ou 2, **caractérisé en ce que** l'élément de détection (9) comporte une structure pourvue d'une couche (10) résistante à la traction et à la compression et appliquée directement sur le côté intérieur (la), d'une couche de caoutchouc (11) et d'un capteur de flexion (12) se trouvant sur le côté extérieur de celle-ci.

4. Pneumatique de véhicule selon la revendication 3, **caractérisé en ce que** la couche (10) résistant à la traction et à la compression comprend des fils d'acier enrobés de caoutchouc et s'étendant dans la direction latérale et parallèlement à celle-ci.

5. Pneumatique de véhicule selon la revendication 3, **caractérisé en ce que** la couche de caoutchouc (11) est réalisée de manière électriquement non conductrice.

6. Pneumatique de véhicule selon la revendication 3, **caractérisé en ce que** le capteur de flexion (12) est une couche de caoutchouc électriquement conductrice.

7. Pneumatique de véhicule selon l'une des revendications 1 à 6, **caractérisé en ce que** la rainure circonférentielle (8) est formée dans la région où un élément de détection (9) est monté du côté intérieur (1a) radialement à l'intérieur de la rainure circonférentielle (8), sa profondeur étant localement plus faible sur quelques centimètres de son extension que celle sur le reste de son étendue.

8. Procédé de détection du risque d'aquaplaning dans un pneumatique de véhicule comprenant une bande de roulement profilée (1) pourvue d'au moins une rainure circonférentielle (8), un bandage de ceinture (2), une carcasse radiale (3) et une couche intérieure (1a) du pneumatique (7), un élément de détection (9) étant exclusivement monté du côté intérieur (1a) radialement à l'intérieur de la rainure circonférentielle (8), lequel élément de détection détecte des flexions du pneumatique exclusivement dans cette zone et détecte des flexions du pneumatique se produisant dans la direction latérale lors du roulement du pneumatique au passage de l'aplatissement, des signaux corrélés avec la flexion respective par l'élément de détection étant envoyés à une électronique d'évaluation qui est intégrée dans le pneumatique et qui envoie des signaux à un système d'affichage situé dans le véhicule ou à un système de sécurité du véhicule en fonction de critères d'évaluation prédéterminés.

9. Procédé selon la revendication 8, **caractérisé en ce que** le système d'affichage situé dans le véhicule émet un signal optique et/ou acoustique lors d'un danger d'aquaplaning.

10. Procédé selon la revendication 8, **caractérisé en ce que** le système de sécurité réduit la vitesse du véhicule.
